# EUROPEAN PATENT APPLICATION

(11) **EP 4 071 659 A1**
(43) Date of publication of application: **12.10.2022**
(21) Application number: 22165158.1
(22) Date of filing: 29.03.2022
(51) Int. Cl.: G06F 30/333, G01R 31/28, G06F 119/12

(54) **METHOD, SYSTEM, MEDIUM, AND PROGRAM PRODUCT FOR PATH VERIFICATION IN LOGIC CIRCUIT**

(30) Priority: 30.03.2021 CN 202110343219
(71) Applicant: Phytium Technology Co., Ltd., Tianjin (CN)
(72) Inventor: LUAN, Xiaokun, Tianjin (CN); BIAN, Shaoxian, Tianjin (CN); HUANG, Wei, Tianjin (CN); SUN, Yongfeng, Tianjin (CN); JIANG, Jianfeng, Tianjin (CN); DENG, Yu, Tianjin (CN); CHEN, Zhanzhi, Tianjin (CN); JIN, Wenjiang, Tianjin (CN); WANG, Cuina, Tianjin (CN); TANG, Tao, Tianjin (CN)
(74) Representative: Ziebig & Hengelhaupt Patent- und Rechtsanwaltskanzlei PartG mbB

(57) **Abstract**

A path verification method in a logic circuit includes determining a plurality of first paths that are to be tested in a design for test (DFT) mode (201), determining a plurality of second paths that are to be tested in a function mode (202), determining a third path in the plurality of first paths and the plurality of second paths that does not need to achieve optimal performance in the function mode (203), and setting a time sequence constraint for the third path in the function mode to cause the third path to achieve target performance within a number AA clock cycles. AA is less than or equal to a ratio of a clock frequency in the function mode to a clock frequency in the DFT mode. AA is a positive integer (204).

## Description

### CROSS-REFERENCES TO RELATED APPLICATION

This application claims priority to Chinese Application No. 202110343219.1 filed on March 30, 2021, the entire content of which is incorporated herein by reference.

### TECHNICAL FIELD

The present disclosure generally relates to the integrated circuit back-end design field and, more particularly, to a method, a system, a medium, and a program product for path verification in a logic circuit.

### BACKGROUND

From design to product, an integrated circuit generally goes through the following steps to become a product.
1. Design process includes writing hardware description language (HDL) code in an integrated circuit design at the beginning, performing logic synthesis and verification to convert the design into a gate-level netlist, and then performing layout and wiring to obtain a final layout.
2. Manufacturing process includes receiving layout data (GDSII) from the designer by an original equipment manufacturer to make a mask and then making a desired circuit on a wafer through a complex manufacturing process. At this time, the wafer has already included original forms (die) of several chips.
3. Wafer test includes performing a strict test on the manufactured wafer, dicing, and packaging. Only a die that passes the test will be packaged. A die that does not pass the test will be eliminated. The die is packaged to become a chip.
4. Chip test includes performing a test to determine whether a chip that passes the wafer test and is packaged has a defect. The chip without a defect may become an authentic semiconductor production. Thus, testing the semiconductor product is an essential step in an implementation process.

A test problem includes a test pattern generation problem and a test pattern verification (time sequence verification) problem before the test. During the test, the test problem includes a test vector application problem, a test response detection problem, and a result determination problem. Test provides a measure for the quality and reliability of the final semiconductor product. Test is a continuation of verification work in the design process and is actually a verification process for an actual chip.

A test is divided into a functional test (function test) and a manufacturing test (structural test). The functional test includes mainly searching for possible errors in the design. The functional test is used to verify logic behavior of the circuit and is a continuation of the verification process. If an error exists, a fault diagnosis is required. The manufacturing test includes searching for a possible manufacturing defect in the manufacturing process.

Design for test (DFT) refers to a design method in which a certain additional logic is intended to be added to the design to make the test (manufacturing test) as simple as possible. DFT shortens the time to market (TTM) of the product, reduces cost of test (COT), and improves product quality.

Because of the importance of the test, it is desired to improve test efficiency.

### SUMMARY

Embodiments of the present disclosure provide a path verification method in a logic circuit. The method includes determining a plurality of first paths that are to be tested in a design for test (DFT) mode, determining a plurality of second paths that are to be tested in a function mode, determining a third path in the plurality of first paths and the plurality of second paths that does not need to achieve optimal performance in the function mode, and setting a time sequence constraint for the third path in the function mode to cause the third path to achieve target performance within a number AA clock cycles. AA is less than or equal to a ratio of a clock frequency in the function mode to a clock frequency in the DFT mode. AA is a positive integer.

Embodiments of the present disclosure provide a path verification system in a logic circuit, including a processor and a memory. The memory stores a computer-executable program product that, when executed by the processor, causes the processor to determine a plurality of first paths that are to be tested in a design for test (DFT) mode, determine a plurality of second paths that are to be tested in a function mode, determine a third path in the plurality of first paths and the plurality of second paths that does not need to achieve optimal performance in the function mode, and set a time sequence constraint for the third path in the function mode to cause the third path to achieve target performance within a number AA clock cycles. AA is less than or equal to a ratio of a clock frequency in the function mode to a clock frequency in the DFT mode. AA is a positive integer.

Embodiments of the present disclosure provide a computer-readable medium. The computer-readable medium stores a computer-executable program product that, when executed by a processor, causes the processor to determine a plurality of first paths that are to be tested in a design for test (DFT) mode, determine a plurality of second paths that are to be tested in a function mode, determine a third path in the plurality of first paths and the plurality of second paths that does not need to achieve optimal performance in the function mode, and set a time sequence constraint for the third path in the function mode to cause the third path to achieve target performance within a number AA clock cycles. AA is less than or equal to a ratio of a clock frequency in the function mode to a clock frequency in the DFT mode. AA is a positive integer.

### BRIEF DESCRIPTION OF THE DRAWINGS

FIG. 1 is a schematic diagram of an exemplary path of a logic circuit that is to be tested.
FIG. 2 is a flowchart of a path verification method in a logic circuit according to some embodiments of the present disclosure.
FIG. 3 is a block diagram of an exemplary computer system according to some embodiments of the present disclosure.

### DETAILED DESCRIPTION OF THE EMBODIMENTS

According to embodiments of the present disclosure, examples of the present disclosure are illustrated in the accompanying drawings. Although the present disclosure is described in connection with embodiments of the present disclosure, the present disclosure is not limited to embodiments of the present disclosure. On the contrary, the scope of the present disclosure covers changes, modifications, and equivalents included in the spirit and the scope of the present disclosure and defined by the appended claims. The method steps described here may be implemented by any functional block or functional arrangement. Any functional block or functional arrangement may be implemented as a physical entity, a logical entity, or a combination thereof.

In conventional logic circuit verification, simulation and verification may need to be performed in a function mode and in a design for test (DFT) mode. Usually, a frequency of a clock tested in the function mode may be higher than a frequency of a clock in the DFT mode. When a test is performed in the function mode, all paths may be optimized based on a test result.

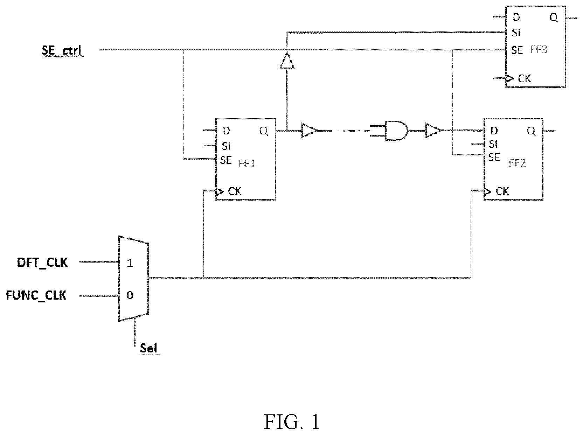

However, some paths may not actually need to achieve optimal performance in the function mode, such as a path FF1/Q - FF3/SI in FIG. 1. FIG. 1 is a schematic diagram of an exemplary path of a logic circuit that is to be tested. Therefore, optimizing such a path may waste resources and be unnecessary, thereby reducing test efficiency.

In order to improve the test efficiency, the present disclosure provides a method, a system, a medium, and a program product for path verification in a logic circuit.

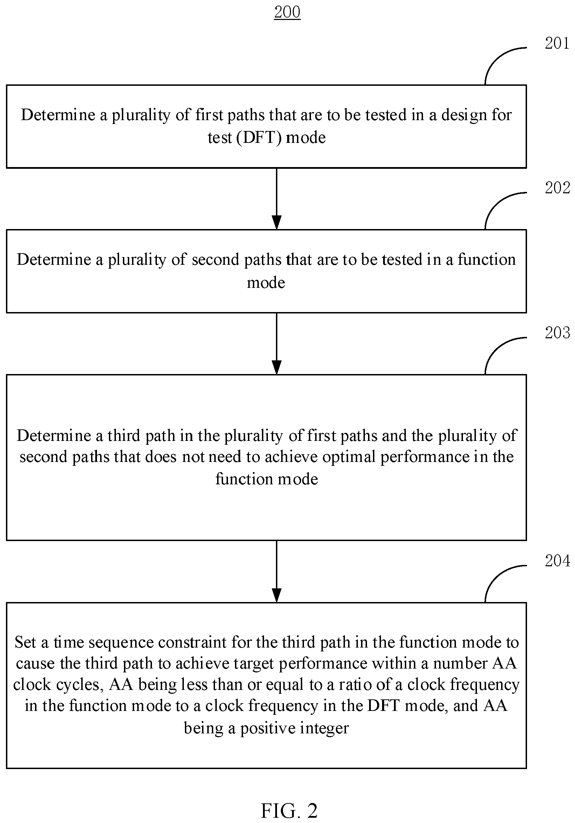

FIG. 2 is a flowchart of a path verification method 200 in a logic circuit according to some embodiments of the present disclosure.

As shown in FIG. 2, the path verification method 200 in the logic circuit includes determining a plurality of first paths that are to be tested in the DFT mode (201), determining a plurality of second paths that are to be tested in the function mode (202), determining a third path in the plurality of first paths and the plurality of second paths that does not need to achieve optimal performance in the function mode (203), and setting a time sequence constraint for the third path in the function mode to cause the third path to achieve a target performance in a number AA clock cycles (204). AA is less than or equal to a ratio of a clock frequency in the function mode to a clock frequency in the DFT mode. AA is a positive integer.

For a more detailed description, the path verification method 200 in the logic circuit shown in FIG. 2 is described below in connection with FIG. 1.

As shown in FIG. 1, an integrated circuit includes a clock selector sel, which is configured to select between the DFT mode and the function mode. A clock input in the DFT mode is DFT_CLK, that is, sel=1: DFT mode (DFT_CLK). A clock input in the function mode is FUNC_CLK, that is, sel=0: Function mode (FUNC_CLK).

The clock selector sel outputs the clock to a clock input terminal CK of a trigger FF1 and a clock input terminal CK of a trigger FF2.

A selection control signal SE_ctrl is input to SE terminals of the triggers FF1, FF2, and FF3 to control whether these triggers are in the DFT mode or the function mode.

At 201, the plurality of first paths that are to be tested in the DFT mode are determined, for example, a path from a Q port of FF1 to an SI port of FF3 (FF1/Q-FF3/SI), a path from the Q port of FF1 to a D port of FF2 (FF1/Q-FF2/D), another path not shown, etc.

At 202, the plurality of second paths that are to be tested in the function mode are determined, for example, a path from the Q port of FF1 to the D port of FF2 (FF1/Q-FF2/D), another path not shown, etc.

At 203, a third path in the plurality of first paths and the plurality of second paths that does not need to achieve the optimal performance in the function mode is determined, for example, the path from the Q port of FF1 to the SI port of FF3 (FF1/Q ->FF3/SI). This is because the path only needs to be tested in the DFT mode and not in function mode.

At 204, the time sequence constraint is set for the third path in the function mode to cause the third path to achieve the target performance within the number AA clock cycles. AA is less than or equal to the ratio of the clock frequency in the function mode to the clock frequency in the DFT mode, and AA is a positive integer.

In general, the clock frequency in the function mode is greater than the clock frequency in the DFT mode. For example, the clock frequency in the function mode may be 2Hz, while the clock frequency in the DFT mode may be 1Hz. Then, AA may be less than or equal to 2 (since the ratio of the clock frequency in the function mode to the clock frequency in the DFT mode is 2). In some embodiments, AA may be 2, that is, a lower integer value of the ratio of the clock frequency in the function mode to the clock frequency in the DFT mode. For example, the clock frequency in the function mode may be 5Hz, while the clock frequency in the DFT mode may be 2Hz. Then, AA may be less than or equal to 2.5 (since the ratio of the clock frequency in the function mode to the clock frequency in the DFT mode is 2.5). AA may be 2, that is, the lower integer value of the ratio of the clock frequency in the function mode to the clock frequency in the DFT mode. This value may cause the time sequence constraint to minimize a number of clock cycles waiting for the third path in the function mode, thereby improving the work efficiency.

By performing the time sequence constraint on the third path in the plurality of first paths and the plurality of second paths that does not need to achieve optimal performance in the function mode, the third path may not need to be over-optimized for the time sequence constraint during a relatively short clock cycle of the function mode (due to a faster clock frequency in the function mode). Thus, time cost and resource cost of over-optimizing the third path in the function mode may be saved, and the chip design efficiency may be improved.

In some embodiments, the time sequence constraint set for the third path may be removed to perform the test in the DFT mode. Since a normal test and optimization may need to be performed on the third path in the DFT mode, the time sequence constraint may not need to be performed.

In some embodiments, setting the time sequence constraint for the third path in the function mode to cause the third path to achieve the target performance within the number AA clock cycles includes setting a time sequence constraint command of set_multicycle_path a on the third path, for example, set_multicycle_path a -from FF1/Q -to FF3/SI. The command may set the path from FF1/Q to FF3/SI to be a multi-clock cycle path, which may be analyzed only in an AA-th clock cycle.

In the existing technology, a format of set_multicycle_path command is usually set_multicycle_path path_multiplier [-setup|-hold] [-start|-end] -from <StartPoint> - through <ThroughPoint> -to <EndPoint>.

In the existing technology, a default value of path multiplier may be setup to 1, hold to 0. The default value of path multiplier may also be another value. setup represents to establish, and hold represents to maintain.
start indicates that the clock that is to be moved is a start clock, that is, a launch clock. hold moves the clock by default.
end indicates that the clock that is to be moved is an end clock, that is, a capture clock. setup moves the clock by default.

When the start clock and the end clock have the same frequency, these two options may be specified to be meaningless, since the frequencies of the two clocks are the same.

-from <StartPoint> -through <ThroughPoint> -to <EndPoint> represents a path, on which the time sequence constraint is performed, that is, the path from the start point to the end point through a passing point. The path may be represented using -from <StartPoint> -to <EndPoint> instead, that is, the path from the start point to the end point.

From a slow clock domain to a fast clock domain, when setup multicycle is set to N (N is a positive integer), hold should correspondingly be set to N-1 (select -end), as follows:

```
     set_multicycle_path N -setup -from [get_clocks CLK1] -to [get_clocks CLK2]
     set_multicycle_path N-1 -hold -end -from [get_clocks CLK1] -to [get_clocks CLK2]
```

From the fast clock domain to the slow clock domain, when the setup (select -start) multicycle is set to N, hold should correspondingly be set to N-1, as follows:

```
    set_multicycle_path N -setup -start -from [get_clocks CLK1] -to [get_clocks CLK2]
    set_multicycle_path N-1 -hold -from [get_clocks CLK1] -to [get_clocks CLK2]
```

The time sequence constraint command of set_multicycle_path a may be set for the third path, for example, set_multicycle_path a -from FF1/Q -to FF3/SI. The time sequence constraint may be a constraint for setup here by default, that is, set_multicycle_path a -setup -start -from FF1/Q -to FF3/SI. Thus, the command may set the path from FF1/Q to FF3/SI to be a multi-clock cycle path. A setup analysis may be performed only in the AA-th clock cycle. For hold, since the hold analysis is in a cycle before the setup analysis, the analysis may generally be started from a sending edge. Thus, the analysis should be started at time AA-1. The command may be set_multicycle_path a-1 -hold -from FF1/Q -to FF3/SI. That is, the command sets the path from FF1/Q to FF3/SI to be a multi-clock cycle path. The hold analysis may be performed only in the AA-1th clock cycle.

As such, an existing command may be used without an additional software tool or a modification to an existing software tool to save the time cost and resource cost caused by over-optimizing the third path in the function mode and improve the chip design efficiency.

In some other embodiments, a command of set_multicycle_path a -from FF1/Q - to FF3/SI may not be necessarily used to implement the time sequence constraint, as long as the path is ensured not to be over-constrained in a high-frequency mode.

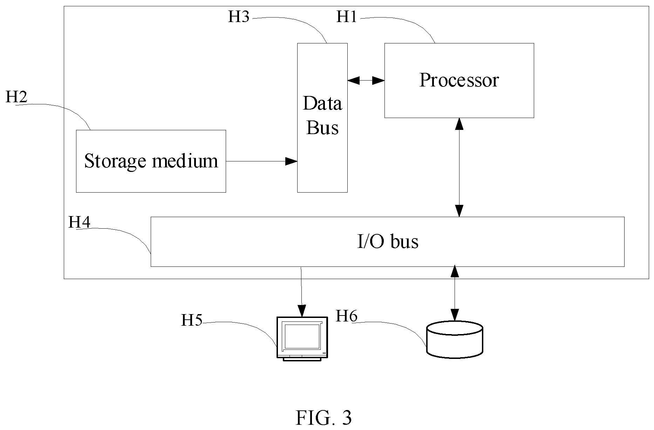

FIG. 3 is a block diagram of an exemplary computer system according to some embodiments of the present disclosure.

The computer system includes a processor (H1) and a memory (H2) coupled to the processor (H1) and storing a computer-executable instruction to cause the processor (H1) to perform steps of the methods of embodiments of the present disclosure.

The processor (H1) may include, but is not limited to, for example, one or more processors or microprocessors.

The memory (H2) may include, but is not limited to, for example, a random access memory (RAM), a read-only memory (ROM), a flash memory, an erasable programmable read-only memory (EPROM) memory, an electrically erasable programmable read-only memory (EEPROM) memory, a register, a computer storage medium (e.g., a hard disk, a floppy disk, a solid state hard drive, a removable disc, a CD-ROM, a DVD-ROM, a Blu-ray disc, etc.).

In addition, the computer system further includes a data bus (H3), an input/output (I/O) bus (H4), a display (H5), and an input/output device (H6) (e.g., a keyboard, a mouse, a speaker, etc.).

The processor (H1) may communicate with external devices (H5, H6, etc.) through the I/O bus (H4) via a wired or wireless network (not shown).

The memory (H2) may further store a computer-executable program product, including at least one computer-executable code that, when executed by the processor (H1), causes the processor (H1) to perform the functions and/or methods of embodiments of the present disclosure.

In some embodiments, a path verification system in a logic circuit includes a processor and a memory. The memory stores a computer-executable program product that, when executed by the processor, causes the processor to determine the plurality of first paths that are to be tested in the DFT mode, determine the plurality of second paths that are to be tested in the function mode, determine the third path in the plurality of first paths and the plurality of second paths that does not need to achieve the optimal performance in the function mode, and set the time sequence constraint for the third path in the function mode to cause the third path to achieve the target performance within the number AA clock cycles. AA is less than or equal to the ratio of the clock frequency in the function mode to the clock frequency in the DFT mode. AA is a positive integer.

In some embodiments, the computer-executable program product that, when executed by the processor, causes the processor further to remove the time sequence constraint set for the third path in the DFT mode.

In some embodiments, setting the time sequence constraint for the third path in the function mode to cause the third path to achieve the target performance within the number AA clock cycles may include setting the time sequence constraint command of set_multicycle_path a for the third path.

By performing the time sequence constraint on the third path in the plurality of first paths and the plurality of second paths that does not need to achieve the optimal performance in the function mode, the third path may not need to be over-optimized for the time sequence convergence in the relatively short clock cycle in function mode (due to the relatively high clock frequency in the function mode). Thus, the time cost and resource cost generated by over-optimizing the third path in function mode may be saved. The chip design efficiency may be improved.

As such, the existing command may also be used without the additional software tool or the modification to the existing software tool to save the time cost and resource costs and improve the chip design efficiency.

Described embodiments are only examples rather than limitations. Those skilled in the art may combine and group some steps and devices of embodiments of the present disclosure to achieve the effect of the present disclosure. Combined and grouped embodiments are also within the present disclosure, which is not described here.

Excellences, advantages, effects, etc., mentioned in the present disclosure are only examples and not limitations. These excellences, advantages, effects, etc., should not be considered as necessarily included in embodiments of the present disclosure. In addition, the specific details disclosed above are only for the purpose of example and easy understanding, rather than limiting. The above details do not limit the present disclosure to be implemented by the above specific details.

The block diagrams of elements, devices, apparatuses, and systems associated with the present disclosure are merely illustrative examples and are not intended to require or imply that the elements, devices, apparatuses, and systems must be connected, arranged, or configured in the manner shown in the block diagrams. Those skilled in the art will know that these elements, devices, apparatuses, and systems may be connected, arranged, and configured in any manner. The terms such as "including," "containing," "having," etc., are open-ended terms, which mean "including but not limited to" and are used interchangeably therewith. The terms "or" and "and" used here may refer to and used interchangeably with the term "and/or" unless the context clearly dictates otherwise. The term "such as" used here may refer to and be used interchangeably with the term "such as but not limited to."

The step flowcharts of the present disclosure and the above method descriptions are merely illustrative examples and are not intended to require or imply that the steps of embodiments of the present disclosure must be performed in the order presented. Those skilled in the art will know, the steps of embodiments of the present disclosure may be performed in any order. The terms such as "thereafter," "then," "next," etc., are not intended to limit the order of the steps. These terms are merely used to guide the reader through the description of the method. In addition, any reference to a singular element, e.g., using the terms "a," "an," or "the," should not be construed as limiting the element to the singular.

In addition, the steps and devices in embodiments of the present disclosure are not limited to be implemented in a certain embodiment. In fact, some steps and devices in embodiments of the present disclosure may be combined according to the concept of the present disclosure to achieve new embodiments. These new embodiments are also within the scope of the present disclosure.

The operations of the method described above may be performed by any suitable means capable of performing the corresponding functions. The means may include various hardware and/or software components and/or modules, including but not limited to a hardware circuit, an application-specific integrated circuit (ASIC), or a processor.

A general-purpose processor, a digital signal processor (DSP), an ASIC, a field-programmable gate array signal (FPGA) or another programmable logic device (PLD), a discrete gate or a transistor logic, a discrete hardware assembly, or any combination thereof designed to perform the functions described here may be configured to implement or perform described examples in terms of logic blocks, modules, and circuits. The general-purpose processor may be a microprocessor, but alternatively, the processor may be any processor, controller, microcontroller, or state machine that may be obtained commercially. The processor may also be implemented as a combination of computation apparatuses, such as a combination of a DSP and a microprocessor, a plurality of microprocessors, a microprocessor cooperating with a DSP core, or any other such configuration.

The steps of the method or algorithm described in connection with the present disclosure may be directly embedded in hardware, in a software module executed by a processor, or in a combination thereof. The software module may exist in any form of tangible storage medium. Some examples of the storage medium that may be used include RAM, ROM, flash memory, EPROM, EEPROM, a register, hard disks, removable disks, CD-ROM, etc. The storage medium may be coupled to the processor such that the processor can read information from, and write information to, the storage medium. In some other embodiments, the storage medium may be integrated with the processor. The software module may be a single instruction or a plurality of instructions, and may be distributed over several different code segments, among different programs, and across a plurality of storage media.

The method disclosed here includes actions for implementing the described method. The methods and/or actions may be interchanged with each other without departing from the scope of the claims. That is, unless a specific order of the actions is specified, the order and/or use of the specific actions may be modified without departing from the scope of the claims.

The above functions may be implemented in hardware, software, firmware, or any combination thereof. If being implemented in software, the functions may be stored as instructions on the tangible computer-readable medium. The storage medium can be any available tangible medium that can be accessed by a computer. Through examples and not limitation, the computer-readable medium may include RAM, ROM, EEPROM, CD-ROM or other optical disk storage, magnetic disk storage or other magnetic storage devices, or any other computer accessible tangible medium that is configured to carry or store instructions or expected program codes of the data structure form. For example, the storage medium may include disk and disc that includes compact disc (CD), laser disc, optical disc, digital versatile disc (DVD), floppy disc, and Blu-ray disc, where a disk typically reproduces data magnetically, and a disc reproduces data optically with a laser.

Thus, a computer program product may perform the operations provided here. For example, the computer program product may include a computer-readable tangible medium having instructions physically stored (and/or encoded) on the computer-readable tangible medium. The instructions may be executed by a processor to perform the operations described here. The computer program product may include packaging materials.

Software or instructions may also be transmitted via a transmission medium. For example, the software may be transmitted from a website, server, or another remote source using a transmission medium such as a coaxial cable, a fiber optic cable, a twisted pair, a digital subscriber line (DSL), or wireless technology such as infrared, radio, or microwave.

Furthermore, modules and/or other suitable means for performing the method and technology described here may be downloaded from a user terminal and/or a base station and/or otherwise obtained. For example, such an apparatus may be coupled to a server to facilitate the transfer of the means for performing the method described here. In some embodiments, the methods described here may be provided via a storage medium (e.g., RAM, ROM, a physical storage medium such as CD or floppy disks, etc.). Thus, the user terminal and/or base station may obtain the methods when being coupled to the apparatus or providing the storage medium to the apparatus. Moreover, any other suitable technology for providing the methods and technologies described here to the apparatus may be utilized.

Other examples and implementations are within the scope and spirit of the present disclosure and appended claims. For example, due to the nature of software, the functions described above may be implemented using software executed by a processor, hardware, firmware, hardwiring, or any combination thereof. Features for implementing the functions may also be physically located at various locations. The features may be distributed so that some functions may be implemented at different physical locations. Moreover, as used here, including in the claims, the term "or" used in listing items beginning with "at least one" indicates a separate list. For example, a list of "at least one of A, B, or C" may mean A or B or C, or AB or AC or BC, or ABC (i.e., A and B and C). Moreover, the term "exemplary" does not imply that the described example is preferred or better than other examples.

Various changes, replacements, and modifications may be made to the technologies described here without departing from the technology taught by the appended claims. Moreover, the scope of the claims of the present disclosure is not limited to the specific aspects of the process, machine, manufacture, composition of events, means, methods, and actions described above. A currently existing or later-to-be-developed process, machine, manufacture, composition of events, means, method, or action may be utilized to perform substantially the same function or achieve substantially the same results as the corresponding aspects described here. Thus, the appended claims include such processes, machines, manufacture, compositions of events, means, methods, or actions within the scope of the claims.

The above description of the disclosed aspects may be provided to enable those skilled in the art to make or use the present disclosure. Various modifications to these aspects will be apparent to those skilled in the art. The generic principles defined here may be applied to other aspects without departing from the scope of the present disclosure. Thus, the present disclosure is not intended to be limited to the aspects shown here but conforms to the widest scope consistent with the principles and novel features disclosed here.

The above description has been presented for the purposes of illustration and description. Moreover, the description is not intended to limit embodiments of the present disclosure to the forms disclosed here. Although a plurality of exemplary aspects and embodiments have been discussed above, those skilled in the art may recognize certain variations, modifications, changes, additions, and sub-combinations of the plurality of exemplary aspects and embodiments.

## Claims

1. A path verification method in a logic circuit comprising:
determining a plurality of first paths that are to be tested in a design for test (DFT) mode;
determining a plurality of second paths that are to be tested in a function mode;
determining a third path in the plurality of first paths and the plurality of second paths that does not need to achieve optimal performance in the function mode; and
setting a time sequence constraint for the third path in the function mode to cause the third path to achieve target performance within a number AA clock cycles, AA being less than or equal to a ratio of a clock frequency in the function mode to a clock frequency in the DFT mode, and AA being a positive integer.

2. The method of claim 1, further comprising:
removing the time sequence constraint set for the third path in the DFT mode.

3. The method of claim 1, wherein setting the time sequence constraint for the third path in the function mode to cause the third path to achieve the target performance within the number AA clock cycles includes:
setting a time sequence constraint command of set_multicycle_path a for the third path.

4. A path verification system in a logic circuit comprising:
a processor; and
a memory storing a computer-executable program product that, when executed by the processor, causes the processor to:
determine a plurality of first paths that are to be tested in a design for test (DFT) mode;
determine a plurality of second paths that are to be tested in a function mode;
determine a third path in the plurality of first paths and the plurality of second paths that does not need to achieve optimal performance in the function mode; and
set a time sequence constraint for the third path in the function mode to cause the third path to achieve target performance within a number AA clock cycles, AA being less than or equal to a ratio of a clock frequency in the function mode to a clock frequency in the DFT mode, and AA being a positive integer.

5. The system of claim 4, wherein the processor is further caused to:
remove the time sequence constraint set for the third path in the DFT mode.

6. The system of claim 4, wherein the processor is further caused to:
set a time sequence constraint command of set_multicycle_path a for the third path.

7. A computer-readable medium storing a computer-executable program product that, when executed by a processor, causes the processor to:
determine a plurality of first paths that are to be tested in a design for test (DFT) mode;
determine a plurality of second paths that are to be tested in a function mode;
determine a third path in the plurality of first paths and the plurality of second paths that does not need to achieve optimal performance in the function mode; and
set a time sequence constraint for the third path in the function mode to cause the third path to achieve target performance within a number AA clock cycles, AA being less than or equal to a ratio of a clock frequency in the function mode to a clock frequency in the DFT mode, and AA being a positive integer.

8. The system of claim 7, wherein the processor is further caused to:
remove the time sequence constraint set for the third path in the DFT mode.

9. The system of claim 7, wherein the processor is further caused to:
set a time sequence constraint command of set_multicycle_path a for the third path.
